# EUROPEAN PATENT APPLICATION

(11) **EP 4 803 305 A1**
(43) Date of publication of application: **09.09.2026**
(21) Application number: 25769544.5
(22) Date of filing: 10.03.2025
(51) Int. Cl.: B32B 17/06, B32B 7/12, B32B 3/08, B32B 33/00, B60J 1/00, C03C 27/12

(54) **LAMINATED GLASS AND VEHICLE**

(30) Priority: 11.03.2024 CN 202410272322
(71) Applicant: Fuyao Glass Industry Group Co., Ltd., Fuqing, Fujian 350300 (CN)
(72) Inventor: LIN, Shou, Fujian 350300 (CN); WANG, Xia, Fujian 350300 (CN); XIA, Yan, Fujian 350300 (CN)
(74) Representative: Gill Jennings & Every LLP
(86) International application number: PCT/CN2025/081579
(87) International publication number: WO 2025/190214

(57) **Abstract**

The present application relates to laminated glass and a vehicle. The laminated glass comprises a first glass plate (10), a first bonding layer (20), a dimming functional layer (30), a second bonding layer (40), and a second glass plate (50) which are sequentially stacked. The first glass plate (10) is configured to face the external environment, and the second glass plate (50) is configured to face the internal environment. The transmittance of a combined structure of the first glass plate (10) and the first bonding layer (20) is set to T1, and the transmittance of a combined structure of the second glass plate (50) and the second bonding layer (40) is set to T2, wherein T1 is set to be 15%-50%, and T2 is set to be 15%-50%.

## Description

### CROSS-REFERENCE TO RELATED APPLICATIONS

This application claims priority to Chinese patent application No. 202410272322.5, entitled "LAMINATED GLASS AND VEHICLE" filed on March 11, 2024, the content of which is hereby incorporated by reference in its entirety.

### TECHNICAL FIELD

The present application relates to the technical field of glass, and in particular to a laminated glass and a vehicle.

### BACKGROUND

Vehicle windows are one of the important components of an automobile. In order to ensure driving safety of the automobile, vehicle window glass is required to have safety performance parameters such as high strength and stiffness. Vehicle window glass is usually designed as a laminated glass, including two or more inorganic glass sheets and one or more functional film layers sandwiched therebetween. The laminated glass has good safety and sound insulation properties, and can be used as front windshield glass, rear windshield glass, side window glass, sunroof glass, etc., when applied in automobile vehicle windows.

In the related art, for example, when the functional film layer is set as a light dimming functional layer, the light dimming functional layer is connected to two glass substrates through adhesive layers. In order to improve the appearance effect of glass transmission, usually the transmittance of various components on one side of the light dimming functional layer is made greater than or less than the transmittance of various components on the other side. The transmittance is the abbreviation for visible light transmittance. A ratio of the transmittances is in a range from 2 to 3. However, this makes the observed states of the laminated glass when viewed from the inside versus the outside different from each other, resulting in poor consistency of the observation results.

### SUMMARY

According to various embodiments of the present application, the present application provides a laminated glass and a vehicle.

A laminated glass, the laminated glass including: a first glass sheet, a first adhesive layer, a light dimming functional layer, a second adhesive layer, and a second glass sheet, which are sequentially stacked; wherein the first glass sheet is configured to face an external environment, and the second glass sheet is configured to face an internal environment; a transmittance of a combined structure of the first glass sheet and the first adhesive layer is set as T1, and a transmittance of a combined structure of the second glass sheet and the second adhesive layer is set as T2; wherein T1 is set to be in a range from 15% to 50%, and T2 is set to be in a range from 15% to 50%.

In one embodiment, T1 is set to be in a range from 20% to 30%, and T2 is set to be in a range from 20% to 30%.

In one embodiment, a difference between T1 and T2 is set to be equal to or less than 10%.

In one embodiment, a transmittance TL1 of the first adhesive layer is set to be in a range from 15% to 50%; and a transmittance TL2 of the second adhesive layer is set to be in a range from 15% to 50%.

In one embodiment, TL1 is set to be in a range from 20% to 30%, and TL2 is set to be in a range from 20% to 30%.

In one embodiment, a difference between TL1 and TL2 is equal to or less than 10%.

In one embodiment, a transmittance of the laminated glass when the light dimming functional layer is in a high transmittance state is set as TLmax, and a reflectance of a side of the laminated glass as a whole facing the internal environment is set as RL, wherein a ratio of TLmax to RL is in a range from 1 to 4.

In one embodiment, the ratio of TLmax to RL is in a range from 2 to 4.

In one embodiment, a reflectance of a side of the second glass sheet facing the internal environment is set as RL, and RL≤5%.

In one embodiment, RL≤3%.

In one embodiment, a transmittance of the first glass sheet is set as TL3, and TL3≥70%.

A vehicle, the vehicle including the laminated glass as described above.

Details of one or more embodiments of the present application are set forth in the following drawings and description. Other features, objects, and advantages of the present application will become apparent from the description, drawings, and claims.

### BRIEF DESCRIPTION OF THE DRAWINGS

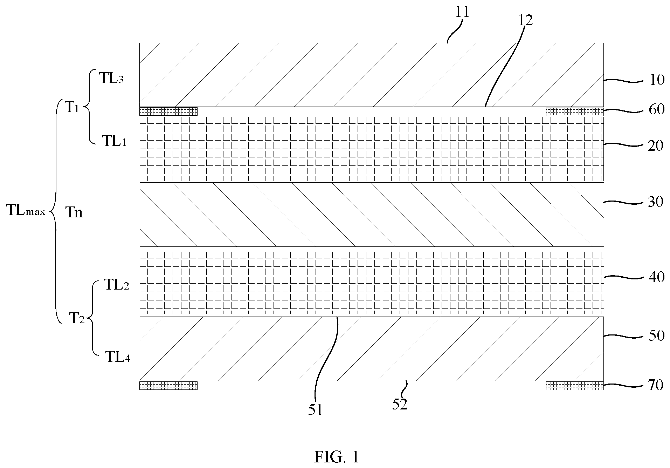

FIG. 1 is a schematic structural view of a laminated glass of an embodiment of the present application.

10. first glass sheet; 11. first surface; 12. second surface; 20. first adhesive layer; 30. light dimming functional layer; 40. second adhesive layer; 50. second glass sheet; 51. third surface; 52. fourth surface; 60. first light blocking layer; 70. second light blocking layer.

### DETAILED DESCRIPTION

In order to make the above objects, features and advantages of the present application more comprehensible, specific embodiments of the present application are described in detail below with reference to the drawings. In the following description, many specific details are set forth to make the present application fully understandable. However, the present application can be implemented in many other ways different from those described herein. Similar improvements can be made by those skilled in the art without departing from the spirit of the present application. The present application is not limited to the specific embodiments disclosed below.

As stated in the background, in the related art, the observed states of the laminated glass when viewed from the inside versus the outside are different from each other, which results in poor consistency of the observation results. The present inventors have found through research that this issue lies in the fact that usually a polymer dispersed liquid crystal (PDLC) film is selected as a material of the light dimming functional layer, and the transmittance is correspondingly changed by adjusting the haze. When the light dimming functional layer exhibits low transmittance, it presents a white haze appearance. If the transmittance of the combined components on the side of the light dimming functional layer adjacent to the external environment is relatively high, the white haze appearance defect is easily observed on the side of the external environment, while no white haze appearance is observed on the side of the internal environment due to the low transmittance. Conversely, if the transmittance of the combined components on the side of the light dimming functional layer adjacent to the internal environment is relatively high, the white haze appearance defect is easily observed on the side of the internal environment, while no white haze appearance is observed on the side of the external environment due to the low transmittance.

Based on the above reasons, the present application provides a laminated glass and a vehicle, which can improve the consistency of the observation results of the interior and exterior of the laminated glass, and can improve the appearance consistency of laminated glasses with different configurations of a same vehicle model.

Referring to FIG. 1, FIG. 1 shows a schematic structural view of a laminated glass of an embodiment of the present application. A laminated glass provided in an embodiment of the present application includes: a first glass sheet 10, a first adhesive layer 20, a light dimming functional layer 30, a second adhesive layer 40, and a second glass sheet 50, which are sequentially stacked. The first glass sheet 10 is configured to face an external environment, and the second glass sheet 50 is configured to face an internal environment. A transmittance of a combined structure of the first glass sheet 10 and the first adhesive layer 20 is set as T1, and a transmittance of a combined structure of the second glass sheet 50 and the second adhesive layer 40 is set as T2. T1 is set to be in a range from 15% to 50%, and T2 is set to be in a range from 15% to 50%.

According to the above laminated glass, the transmittance T1 of the combined structure of the first glass sheet 10 and the first adhesive layer 20 is in a range from 15% to 50%, which is relatively low. Thus, when observing the laminated glass from the external environment, the haze of the light dimming functional layer 30 is neutralized, making the white haze state of the light dimming functional layer 30 not obvious, thereby alleviating the white haze appearance issue. Similarly, the transmittance T2 of the combined structure of the second glass sheet 50 and the second adhesive layer 40 is in a range from 15% to 50%, which is relatively low. Thus, when observing the laminated glass from the internal environment, the haze of the light dimming functional layer 30 is neutralized, making the white haze state of the light dimming functional layer 30 not obvious, thereby alleviating the white haze appearance issue. That is, the transmittances on the internal and external sides of the light dimming functional layer are essentially the same, which can improve the consistency of the observation results of the interior and exterior of the laminated glass, so that drivers and passengers can obtain a relatively good bidirectional observation experience. Besides, the appearance consistency of laminated glasses with different configurations of a same vehicle model can be improved. In addition, both the transmittance T1 and the transmittance T2 are greater than or equal to 15%, which are not excessively low. Thus, the overall transmittance of the laminated glass is not too low to affect the light dimming effect, and the fourth surface 52 of the laminated glass does not generate obvious reflection phenomenon.

In some embodiments, when observing the laminated glass from the external environment, the reflection state of the laminated glass is mainly observed due to the relatively dark internal environment, and the low transmittance of the first adhesive layer 20 plays a role in shielding the white haze state, thereby exhibiting a good appearance effect. When observing the laminated glass from the internal environment, the overall transmission effect of the laminated glass is mainly displayed. At this time, light from the external environment needs to pass through two adhesive layers with low transmittance, i.e., the first adhesive layer 20 and the second adhesive layer 40, and the entered light amount is relatively low, so that the white haze appearance issue can be alleviated from the internal environment. Therefore, when observing the laminated glass from the internal environment or the external environment, a good consistent appearance experience can be obtained.

In some embodiments, the transmittance T1 can be but is not limited to 15%, 20%, 22%, 25%, 26%, 28%, 30%, 35%, 40%, 45%, or 50%. In addition, the transmittance T2 can be but is not limited to 15%, 20%, 22%, 25%, 26%, 28%, 30%, 35%, 40%, 45%, or 50%.

In one embodiment, T1 is set to be in a range from 20% to 30%, and T2 is set to be in a range from 20% to 30%. In this way, the transmittances on the internal and external sides of the light dimming functional layer are substantially the same, meanwhile the overall transmittance of the laminated glass is sufficiently high, exhibiting a relatively good dimming effect, i.e., having a relatively high comprehensive evaluation performance.

In one embodiment, a difference between T1 and T2 is set to be equal to or less than 10%. In this way, the difference between T1 and T2 is relatively small, which can improve the consistency of the observation results of the laminated glass from the inside and the outside, so that drivers and passengers can obtain a relatively good bidirectional observation experience.

The smaller the difference between T1 and T2, the better the consistency of the observation results of the laminated glass from the inside and the outside.

In some embodiments, the difference between T1 and T2 can be but is not limited to 10%, 8%, 6%, 5%, 4%, 3%, 2%, 1%, 0%, etc. Of course, the difference between T1 and T2 can also be flexibly adjusted and set to be greater than 10% according to actual needs, such as 15%, 20%, 25%, 30%, etc.

In some embodiments, the first adhesive layer 20 can be a single adhesive layer or a multi-layer composite adhesive layer, which can be flexibly adjusted and set according to actual needs. Similarly, the second adhesive layer 40 can be a single adhesive layer or a multi-layer composite adhesive layer, which can be flexibly adjusted and set according to actual needs.

In one embodiment, a transmittance TL1 of the first adhesive layer 20 is set to be in a range from 15% to 50%. In addition, a transmittance TL2 of the second adhesive layer 40 is set to be in a range from 15% to 50%. In this way, by adjusting and controlling the transmittance TL1 of the first adhesive layer 20 to 15% to 50%, the transmittance T1 can be controlled at 15% to 50%. Thus, when viewed from the outside, it can better shield the white haze visual effect caused by a high haze of the light dimming functional layer 30 in a certain state. In addition, by adjusting and controlling the transmittance TL2 of the second adhesive layer 40 to 15% to 50%, the transmittance T2 can be controlled at 15% to 50%. Thus, when viewed from the inside, it can better shield the white haze visual effect caused by a high haze of the light dimming functional layer 30 in a certain state.

In one embodiment, the material and thickness of the first adhesive layer 20 and the second adhesive layer 40 are independently selected and adjusted according to actual needs, as long as their respective transmittances meet the preset requirements. The first adhesive layer 20 and the second adhesive layer 40 can be made of the same or different materials, which can include but are not limited to a PVB material, an EVA material, a TPU material, or an SGP material. In addition, the first adhesive layer 20 and the second adhesive layer 40 can have the same or different thicknesses, which can be but are not limited to 0.38 mm, 0.76 mm, 1 mm, 1.2 mm, 1.4 mm, 1.6 mm, 1.8 mm, 2 mm, etc., and can be flexibly adjusted and set according to actual needs.

In some embodiments, the transmittance TL1 can be but is not limited to 15%, 20%, 22%, 25%, 26%, 28%, 30%, 35%, 40%, 45%, or 50%. In addition, the transmittance TL2 can be but is not limited to 15%, 20%, 22%, 25%, 26%, 28%, 30%, 35%, 40%, 45%, or 50%.

In one embodiment, TL1 is set to be in a range from 20% to 30%, and TL2 is set to be in a range from 20% to 30%. In this way, the transmittances on the internal and external sides of the light dimming functional layer are substantially the same, meanwhile the overall transmittance of the laminated glass is sufficiently high, exhibiting a relatively good dimming effect, i.e., having a relatively high comprehensive evaluation performance.

In one embodiment, a difference between TL1 and TL2 is equal to or less than 10%. In this way, the difference between TL1 and TL2 is relatively small, which can improve the consistency of the observation results of the laminated glass from the inside and the outside, so that drivers and passengers can obtain a relatively good bidirectional observation experience.

The smaller the difference between TL1 and TL2, the smaller the difference between T1 and T2, and thus the better the consistency of the observation results of the laminated glass from the inside and the outside.

In some embodiments, the difference between TL1 and TL2 can be but is not limited to 10%, 8%, 6%, 5%, 4%, 3%, 2%, 1%, 0%, etc. Of course, the difference between TL1 and TL2 can also be flexibly adjusted and set to be greater than 10% according to actual needs, such as 15%, 20%, 25%, 30%, etc.

In one embodiment, a transmittance of the laminated glass when the light dimming functional layer 30 is in a high transmittance state is set as TLmax. A reflectance of a side of the laminated glass as a whole facing the internal environment is set as RL, that is, the reflectance of the side of the second glass sheet 50 facing the internal environment is set as RL. A ratio of TLmax to RL is in a range from 1 to 4. In this way, the overall transparent effect of the laminated glass in a high transmittance state can be enhanced, because the transmitted light amount is greater than the reflected light amount, and the mirror effect does not affect observation by the passengers in the vehicle. In addition, if the ratio of TLmax to RL is excessively large, such as greater than 4, the white haze effect of the entire laminated glass is obvious when the light dimming functional layer 30 is in an off state.

The "off state" refers to a state when the light dimming functional layer 30 is in a low transmittance state. Specifically, for a normal-mode light dimming functional layer 30, when the light dimming functional layer 30 is energized, the light dimming functional layer 30 is in a high transmittance state; and when the light dimming functional layer 30 is de-energized, the light dimming functional layer 30 is in an off state. Conversely, for a reverse-mode light dimming functional layer 30, when the light dimming functional layer 30 is energized, the light dimming functional layer 30 is in an off state; and when the light dimming functional layer 30 is de-energized, the light dimming functional layer 30 is in a high transmittance state.

In one embodiment, the ratio of TLmax to RL is in a range from 2 to 4.

In one embodiment, the ratio of TLmax to RL is in a range from 2.5 to 4.

In one embodiment, a reflectance of a side of the second glass sheet 50 facing the internal environment is set as RL, and RL≤5%. In this way, when observed from inside of the vehicle, a relatively good reflection effect is achieved, and the mirror-like appearance issue of the glass is reduced. This problem is solved also due to the use of the adhesive layers with low transmittances. The reflection on the fourth surface 52 of the laminated glass mainly is the superposition of reflections at different interfaces. Due to the use of the adhesive layers with low transmittances, light from the inside entered the first glass sheet 10 is sequentially absorbed by the first adhesive layer 20 and the second adhesive layer 40 (passing through and being absorbed once + being reflected at a certain medium, then passing through a gray film and being absorbed once again), thereby finally reducing the contribution to the reflection effect of the laminated glass.

In one embodiment, RL≤3%, specifically for example, 3%, 2%, 1%, etc. In this way, the smaller the RL, the less the mirror-like reflection effect of the glass, and thus the mirror-like appearance problem of the glass can be better solved.

In one embodiment, the first glass sheet 10 and the second glass sheet 50 are independently configured, made of glass or PC material, but not limited thereto, as long as their respective transmittances meet the preset requirements.

In one embodiment, a transmittance TL3 of the first glass sheet 10 is ≥70%. In this way, the first glass sheet 10 is highly transparent, absorbs little heat, and plays a good heat insulation role. The transmittance TL3 can be but is not limited to 70%, 72%, 75%, 80%, 82%, 85%, 90%, etc. Of course, the transmittance TL3 can also be set to a value less than 70%.

In some embodiments, a surface treatment is performed on a surface of the first glass sheet 10 facing the light dimming functional layer 30, so as to reflect heat and provide a comfortable in-vehicle experience.

In some embodiments, a transmittance TL4 of the second glass sheet 50 can be greater than the transmittance TL3, the same to the transmittance TL3, or less than the transmittance TL3, which can be flexibly adjusted and set according to actual needs. The transmittance TL4 can be but is not limited to 30%, 40%, 50%, 60%, 70%, 80%, 90%, etc., as long as the transmittance T2 of the combined structure with the second adhesive layer 40 satisfies 15% to 50%.

In one embodiment, the light dimming functional layer 30 includes a PDLC film. Thus, the light dimming functional layer 30 using PDLC as its material has a high haze exceeding 80% in a certain state. PDLC is generally a white PDLC, a dyed PDLC, a reverse PDLC, a steady-state PDLC, etc., which can be flexibly adjusted and set according to actual needs, and is not limited herein.

In some embodiments, the light dimming functional layer 30 is not limited to include a PDLC film, and can also include one of an LC film, a PDLC film, a GHLC film, a PNLC film, a PSLC film, a PILC film, or a combination of two or more.

In some embodiments, the first glass sheet 10 includes a first surface 11 and a second surface 12 opposite to each other, and the first surface 11 faces the external environment. The second glass sheet 50 includes a third surface 51 and a fourth surface 52 opposite to each other, the second surface 12 faces the third surface 51, the first adhesive layer 20 is connected to the second surface 12, and the second adhesive layer 40 is connected to the third surface 51. The fourth surface 52 faces the internal environment.

In some embodiments, a first light blocking layer 60 is provided on the second surface 12 of the first glass sheet 10. The first light blocking layer 60 is located at a periphery of the second surface 12. A visible light transmittance of the first light blocking layer 60 is, for example, ≤50%, which can be but is not limited to 50%, 40%, 35%, 30%, 25%, 20%, 15%, 10%, 5%, 0%, etc. The first light blocking layer 60 is configured to block light, meaning that it is equivalent to a black border. In addition, a second light blocking layer 70 is provided on the third surface 51 or the fourth surface 52 of the second glass sheet 50. The second light blocking layer 70 is located at a periphery of the third surface 51 or the fourth surface 52. A visible light transmittance of the second light blocking layer 70 is, for example, ≤50%, which can be but is not limited to 50%, 40%, 35%, 30%, 25%, 20%, 15%, 10%, 5%, 0%, etc. The second light blocking layer 70 is configured to block light, meaning that it is equivalent to a black border.

In some embodiments, the laminated glass further includes an anti-scratch coating and/or an anti-splash film layer disposed on the first glass sheet 10. In this way, functions such as anti-scratch and anti-splash can be achieved, making the product functions diversified.

In one embodiment, the anti-scratch coating is applied to the first surface 11 of the first glass sheet 10 through processing methods such as spraying and pasting.

In one embodiment, the anti-splash film layer is applied to the first surface 11 of the first glass sheet 10 through processing methods such as spraying and pasting.

Referring to FIG. 1, in one embodiment, a vehicle includes but is not limited to an automobile, a bus, a car, a transit bus, a motorcoach, a truck, a jeep, a train, a high-speed rail, etc. The vehicle includes the laminated glass according to any one of the above embodiments. The laminated glass can be but is not limited to front windshield glass, side windshield glass, rear windshield glass, or sunroof glass of a vehicle, etc.

According to the above vehicle, the transmittance T1 of the combined structure of the first glass sheet 10 and the first adhesive layer 20 is in a range from 15% to 50%, which is relatively low. Thus, when observing the laminated glass from the external environment, the haze of the light dimming functional layer 30 is neutralized, making the white haze state of the light dimming functional layer 30 not obvious, thereby alleviating the white haze appearance issue. Similarly, the transmittance T2 of the combined structure of the second glass sheet 50 and the second adhesive layer 40 is in a range from 15% to 50%, which is relatively low. Thus, when observing the laminated glass from the internal environment, the haze of the light dimming functional layer 30 is neutralized, making the white haze state of the light dimming functional layer 30 not obvious, thereby alleviating the white haze appearance issue. That is, the transmittances on the internal and external sides of the light dimming functional layer are essentially the same, which can improve the consistency of the observation results of the interior and exterior of the laminated glass, so that drivers and passengers can obtain a relatively good bidirectional observation experience. Besides, the appearance consistency of laminated glasses with different configurations of a same vehicle model can be improved. In addition, both the transmittance T1 and the transmittance T2 are greater than or equal to 15%, which are not excessively low. Thus, the overall transmittance of the laminated glass is not too low to affect the light dimming effect, and the fourth surface 52 of the laminated glass does not generate obvious reflection phenomenon.

Referring to Table 1 below, Table 1 shows different evaluation performances corresponding to laminated glasses with different process parameters.

In which, the evaluation is represented by "+". The more "+", the better the surface effect. It can be seen that the comprehensive evaluations of the examples of the present application all have 3 "+" or more, indicating relatively good overall appearance evaluation results. Although in some cases, the comparative examples also have "+++" comprehensive performance, due to the use of inconsistent first adhesive layer 20 and second adhesive layer 40, they still suffer from the problem of inconsistency between the interior and the exterior. Meanwhile, in actual production, film sheets of different colors may be required, and TL1 and TL2 in the semi-finished state are relatively difficult to distinguish, which increases the difficulty of production control and is prone to causing mis-operations, such as reversing the interior and exterior side.

**Table 1: Evaluation Criteria**

| Scoring Criteria | + | ++ | +++ | ++++ |
|---|---|---|---|---|
| White haze evaluation on the external side | 50%≤TL1 | 30%≤TL1<50% | 10%≤TL1<30% | TL1<10% |
| White haze evaluation on the internal side | 50%≤TL2 | 30%≤TL2<50% | 10%≤TL2<30% | TL2<10% |
| Reflection effect evaluation inside vehicle | (TLmax/RL)<1 | 1≤(TLmax/RL)<2 | 2≤(TLmax/RL)<3 | 3≤(TLmax/RL)≤4 |
| Transparency of product | TLmax<2% | 2%≤TLmax<5% | 5%≤TLmax<10% | TLmax≥10% |
| Comprehensive evaluation | two or more of "+" | "+"≤1, no "+++++", and no more than two "+++" | no "+" and no "++++", | 1. no "+"; |
| | | | | 2. three or more "++++", or four "+++" |
| | | | three or more "++++", | |
| | | | 2. If there are two "++", the other two are "++++". | |

A specific example not included in Table 2 below is described for detailed explanation. For example, the light dimming functional layer 30 is a white PDLC light dimming film. When the light dimming functional layer 30 is energized, its transmittance is at the highest transmittance state, with a transmittance of 85%; and when the light dimming functional layer 30 is de-energized, it exhibits a white haze state. The first glass sheet 10 is a 2.1 mm transparent glass. In order to achieve a good heat insulation effect, a silver functional layer is sputtered on the first glass sheet 10 to realize the heat insulation effect. The TL1 of the first glass sheet is about 86%. The first adhesive layer 20 and the second adhesive layer 40 each adopt a 0.76 mm gray PVB film with a nominal transmittance of 27%, while the actual TL2 andTL3 are each about 29%. The second glass sheet 50 is a 2.1 mm transparent glass. In order to achieve a good reflection effect, an anti-reflection treatment such as sputtering or coating is performed on the fourth surface 52 of the second glass sheet 50. The transmittance of the second glass sheet 50 is about 88%. For the final assembly product, the reflectance is about 2.5%, and the TLmax is about 5%. Regardless of viewing from inside the vehicle or outside the vehicle, the white haze effect is slight, due to the shielding effect of PVB. When the light dimming functional layer is in an on state, the laminated glass has a relatively high transmittance state.

**Table 2 shows specific values of Examples and Comparative Examples.**

| Item | Example | | | | |
|---|---|---|---|---|---|
| | Case 1 | Case 2 | Case 3 | Case 4 | Case 5 |
| TL3/% | 90.2% | 89.8% | 88.5% | 87.6% | 87.4% |
| TL1/% | 44.3% | 29.8% | 28.7% | 27.1% | 18.2% |
| TL2/% | 44.1% | 29.9% | 28.3% | 26.8% | 18.9% |
| TL4/% | 86.6% | 85.2% | 88.0% | 89.0% | 87.5% |
| RL/% | 3.9% | 2.5% | 2.8% | 2.5% | 2.9% |
| TLmax/% | 14.0% | 6.8% | 6.7% | 6.5% | 3.1% |
| TLmax/RL | 3.6 | 2.7 | 2.4 | 2.6 | 1.1 |
| White haze evaluation on the external side | ++ | +++ | +++ | +++ | +++ |
| White haze evaluation on the internal side | ++ | +++ | +++ | +++ | +++ |
| Reflection effect evaluation inside vehicle | ++++ | +++ | +++ | +++ | +++ |
| Transparency of product | ++++ | +++ | +++ | +++ | ++ |
| Comprehensive evaluation | +++ | ++++ | ++++ | ++++ | +++ |

| Item | Comparative Example | | | | |
|---|---|---|---|---|---|
| | Case 6 | Case 7 | Case 8 | Case 9 | Case 10 |
| TL3/% | 89.6% | 88.9% | 89.2% | 89.3% | 88.8% |
| TL1/% | 88.3% | 7.5% | 44.5% | 44.3% | 18.4% |
| TL2/% | 87.9% | 8.1% | 18.6% | 18.1% | 43.9% |
| TL4/% | 86.6% | 87.2% | 88.3% | 88.3% | 85.3% |
| RL/% | 6.3% | 2.3% | 2.5% | 5.1% | 2.8% |
| TLmax/% | 51.2% | 1.4% | 6.1% | 6.0% | 5.8% |

As can be seen from the above table, when TL1 is set to be in a range from 15% to 50%, TL2 is set to be in a range from 15% to 50%, and the ratio of TLmax to RL is set to 1 to 4, the comprehensive evaluation is relatively good. Further, when TL1 is set to be in a range from 20% to 30%, TL2 is set to be in a range from 20% to 30%, and the ratio of TLmax to RL is set to 2 to 4 or even 2.5 to 4, the comprehensive evaluation is further improved.

In addition, the terms "first" and "second" are only used for descriptive purposes and cannot be understood as indicating or implying relative importance or implicitly indicating the quantity of the indicated technical features. Therefore, the features modified by "first" or "second" may explicitly or implicitly include at least one of the features. In the description of the present application, the "plurality" means at least two, such as two, three, etc., unless otherwise specifically defined.

In the present application, unless otherwise clearly specified and defined, the terms "installed", "connected", "coupled", "fixed" and the like should be understood broadly. For example, an element, when being referred to as being "installed", "connected", "coupled", or "fixed" to another element, unless otherwise specifically defined, may be fixedly connected, detachably connected, or integrated to the other element, may be mechanical connected or electrically connected to the other element, and may be directly connected to the other element or connected to the other element via an intermediate medium, or may be the internal communication of two elements or the interaction relationship between them. For those skilled in the art, the specific meanings of the above terms in the present application can be understood according to specific circumstances.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A laminated glass, comprising: a first glass sheet, a first adhesive layer, a light dimming functional layer, a second adhesive layer, and a second glass sheet, which are sequentially stacked; wherein the first glass sheet is configured to face an external environment, and the second glass sheet is configured to face an internal environment; a transmittance of a combined structure of the first glass sheet and the first adhesive layer is set as T1, and a transmittance of a combined structure of the second glass sheet and the second adhesive layer is set as T2; wherein T1 is set to be in a range from 15% to 50%, and T2 is set to be in a range from 15% to 50%.

2. The laminated glass according to claim 1, wherein T1 is set to be in a range from 20% to 30%, and T2 is set to be in a range from 20% to 30%.

3. The laminated glass according to claim 1 or 2, wherein a difference between T1 and T2 is set to be equal to or less than 10%.

4. The laminated glass according to any one of claims 1 to 3, wherein a transmittance TL1 of the first adhesive layer is set to be in a range from 15% to 50%; and a transmittance TL2 of the second adhesive layer is set to be in a range from 15% to 50%.

5. The laminated glass according to claim 4, wherein TL1 is set to be in a range from 20% to 30%, and TL2 is set to be in a range from 20% to 30%.

6. The laminated glass according to claim 4 or 5, wherein a difference between TL1 and TL2 is equal to or less than 10%.

7. The laminated glass according to any one of claims 1 to 6, wherein a transmittance of the laminated glass when the light dimming functional layer is in a high transmittance state is set as TLmax, and a reflectance of a side of the laminated glass as a whole facing the internal environment is set as RL, wherein a ratio of TLmax to RL is in a range from 1 to 4.

8. The laminated glass according to claim 7, wherein the ratio of TLmax to RL is in a range from 2 to 4.

9. The laminated glass according to any one of claims 1 to 8, wherein a reflectance of a side of the second glass sheet facing the internal environment is set as RL, and RL≤5%.

10. The laminated glass according to any one of claims 1 to 9, wherein a transmittance of the first glass sheet is set as TL3, and TL3≥70%.

11. A vehicle, comprising the laminated glass according to any one of claims 1 to 10.
